# EUROPEAN PATENT APPLICATION

(11) **EP 4 598 074 A1**
(43) Date of publication of application: **06.08.2025**
(21) Application number: 23873216.8
(22) Date of filing: 27.09.2023
(51) Int. Cl.: H04W 8/02, H04W 40/24, H04W 8/18, H04W 60/00

(54) **METHOD FOR DETERMINING URSP RULE**

(30) Priority: 30.09.2022 US 202263411643 P; 04.10.2022 US 202263412891 P
(71) Applicant: LG Electronics Inc., Yeongdeungpo-gu Seoul 07336 (KR)
(72) Inventor: KIM, Laeyoung, Seoul 06772 (KR)
(74) Representative: Plasseraud IP
(86) International application number: PCT/KR2023/015048
(87) International publication number: WO 2024/072107

(57) **Abstract**

One disclosure of the present specification provides a method by which a target V-SMF performs communication. The method comprises the steps of: establishing a first UE policy association with an H-PCF for a first UE; establishing a second UE policy association with the H-PCF for a second UE; receiving a service parameter from a V-UDR; selecting either the first UE policy association or the second UE policy association on the basis of the service parameter being applicable to the first UE and the second UE; and transmitting, to the H-PCF, through the selected one UE policy association, a policy message including the service parameter for the first UE and the second UE, wherein the first UE is different from the second UE, and the first UE and the second UE can be a UE subscribing to an HPLMN including the H-PCF.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### DESCLOSURE

### TECHNICAL SOLUTION

If the same service parameter is applicable to multiple UEs, the V-PCF may transmit the service parameter to the H-PCF only once for multiple UEs.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a block diagram of a next generation cellular network.
FIG. 5 illustrates an example 5G system structure to which an implementation of the present specification may be applied.
FIGS. 6 and 7 show an example of a registration procedure to which implementations of the present disclosure is applied.
FIGS. 8a and 8b show procedures according to embodiments of this specification.
FIG. 9 shows the procedure of the target V-PCF according to disclosure of the present specification.
FIG. 10 shows the procedure of the target H-PCF according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B".

Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

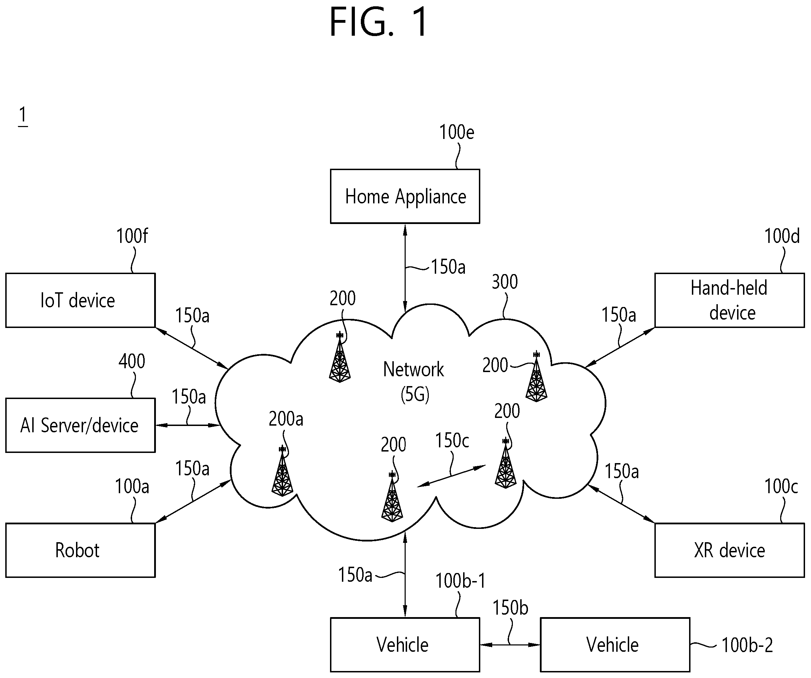

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety.

For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

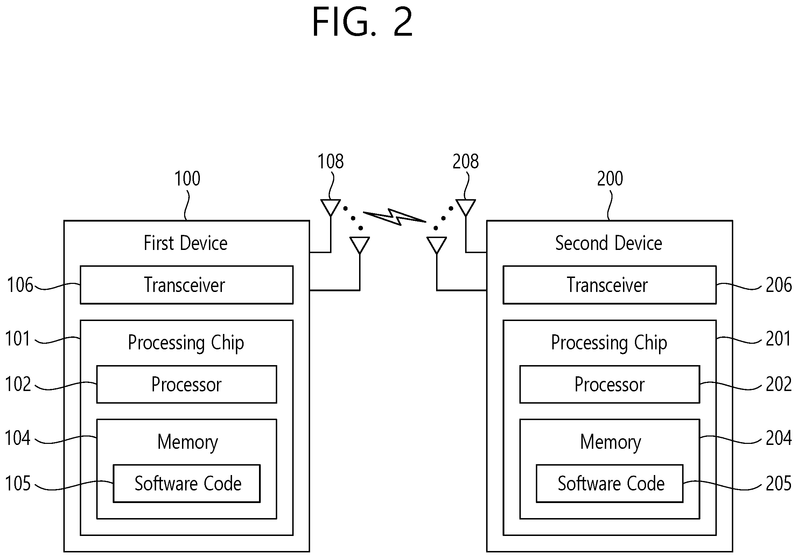

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

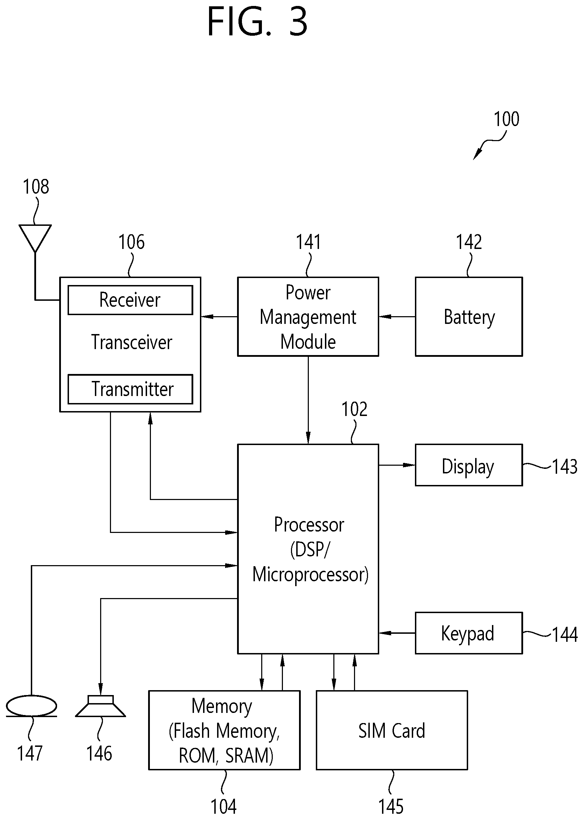

**FIG. 3** **shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

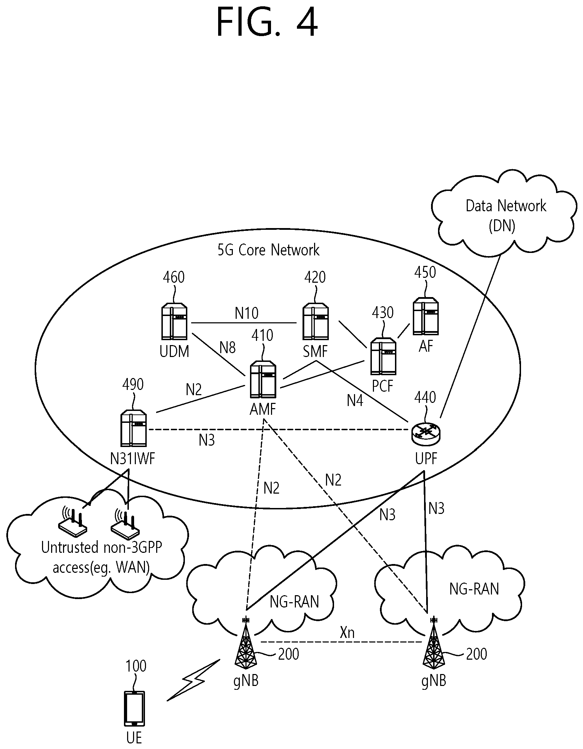

**FIG. 4** **is a block diagram of a next generation cellular network.**

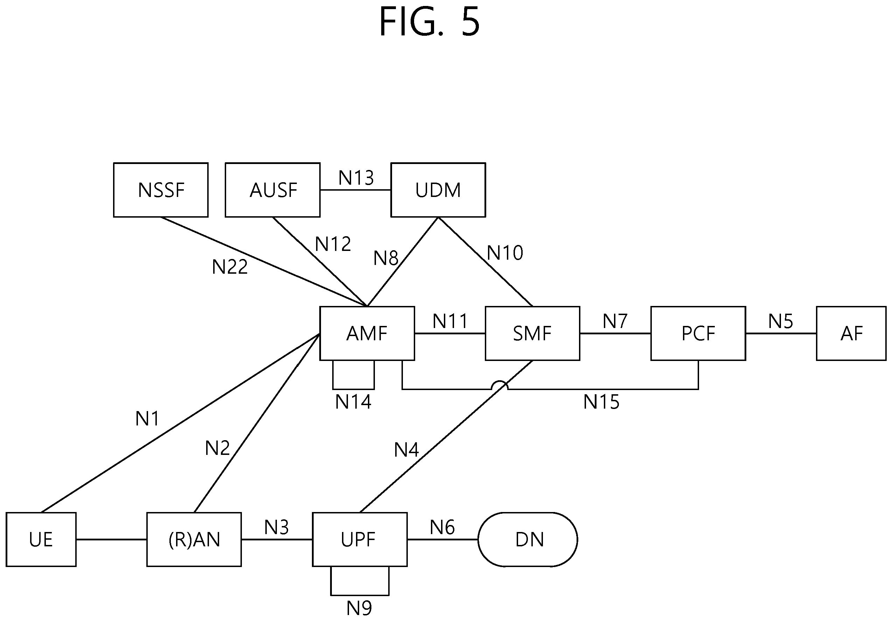

The 5G Core (5GC) may include a variety of components, some of which are shown in FIG. 5, such as the Access and Mobility Management Function (AMF) (410), the Session Management Function (SMF) (420), the Policy Control Function (PCF) (430), the User Plane Function (UPF) (440), the Application Function (AF) (450), the UDF (UDF) (450), and the UDF (UDF) (450): Policy Control Function (PCF) (430), User Plane Function (UPF) (440), Application Function (AF) (450), Unified Data Management (UDM) (460), and Non-3rd Generation Partnership Project (3GPP) Inter Working Function (N3IWF) (490).

The UE 100 is connected to the data network via the UPF 440 through a next generation radio access network (NG-RAN) including the gNB 20.

The UE 100 may also be provided data services via untrusted non-3GPP access, such as a wireless local area network (WLAN). To connect said non-3GPP access to the core network, a N3IWF 490 may be deployed.

The illustrated N3IWF 490 performs the function of managing the interworking between the non-3GPP access and the 5G system. When the UE 100 is associated with a non-3GPP access (e.g., WiFi, also referred to as IEEE 801.11), the UE 100 may be associated with the 5G system via the N3IWF 490. The N3IWF 490 communicates with the AMF 410 for control signaling and with the UPF 440 via the N3 interface for data transfer.

The illustrated AMF 410 may manage access and mobility in a 5G system. The AMF 410 may perform functions to manage Non-Access Stratum (NAS) security. The AMF 410 may perform functions to handle mobility in an idle state.

The UPF 440 shown is a type of gateway through which user data is transmitted and received. The UPF node 440 may perform all or part of the user plane functions of the Serving Gateway (S-GW) and Packet Data Network Gateway (P-GW) of fourth generation mobile communications.

The UPF 440 acts as a demarcation point between the next generation radio access network (NG-RAN) and the core network, and is the element that maintains the data path between the gNB 20 and the SMF 420. Additionally, the UPF 440 acts as a mobility anchor point when the UE 100 moves across the area served by the gNB 20. The UPF 440 may perform functions to handle PDUs. For mobility within the NG-RAN (Next Generation-Radio Access Network as defined in 3GPP Release-15 and later), the UPF may route packets. The UPF 440 may also function as an anchor point for mobility with other 3GPP networks (RANs defined prior to 3GPP Release-15, e.g., UTRAN, E-UTRAN (Evolved-UMTS (Universal Mobile Telecommunications System) Terrestrial Radio Access Network), or GERAN (Global System for Mobile Communication (GSM)/EDGE (Enhanced Data rates for Global Evolution) Radio Access Network). The UPF 440 may correspond to a termination point of the data interface to the data network.

The PCF 430 shown is a node that controls the operator's policies.

The AF 450 shown is a server for providing multiple services to the UE 100.

The UDM 460 shown is a type of server that manages subscriber information, such as a home subscriber server (HSS) in fourth generation mobile communications. The UDM 460 stores and manages subscriber information in a unified data repository (UDR).

The SMF 420 shown may perform the function of assigning an Internet Protocol (IP) address of a UE. The SMF 420 may also control protocol data unit (PDU) sessions.

As a point of reference, the drawing symbols for AMF 410, SMF 420, PCF 430, UPF 440, AF 450, UDM 460, N3IWF 490, gNB 20, or UE 100 may be omitted herein.

Fifth generation mobile communications supports multiple numerologies or subcarrier spacings (SCS) to support various 5G services. For example, an SCS of 15 kHz supports wide area coverage in traditional cellular bands; an SCS of 30 kHz/60 kHz supports dense-urban, lower latency, and wider carrier bandwidth; and an SCS of 60 kHz or higher supports bandwidths greater than 24.25 GHz to overcome phase noise.

**FIG. 5** **illustrates an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### <Registration procedure>

A registration procedure is described. Section 4.2.2.2 of 3GPP TS 23.502 V16.3.0 (2019-12) can be referred.

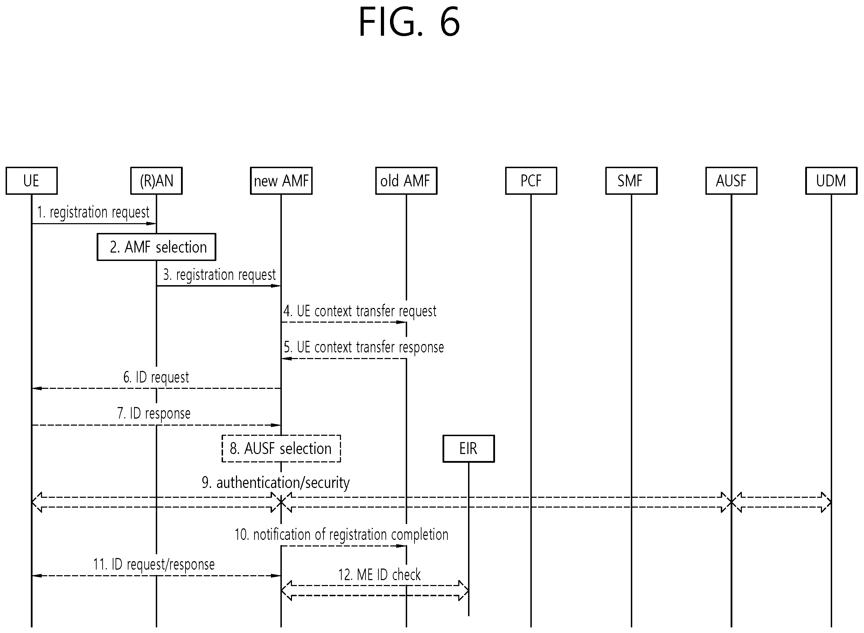

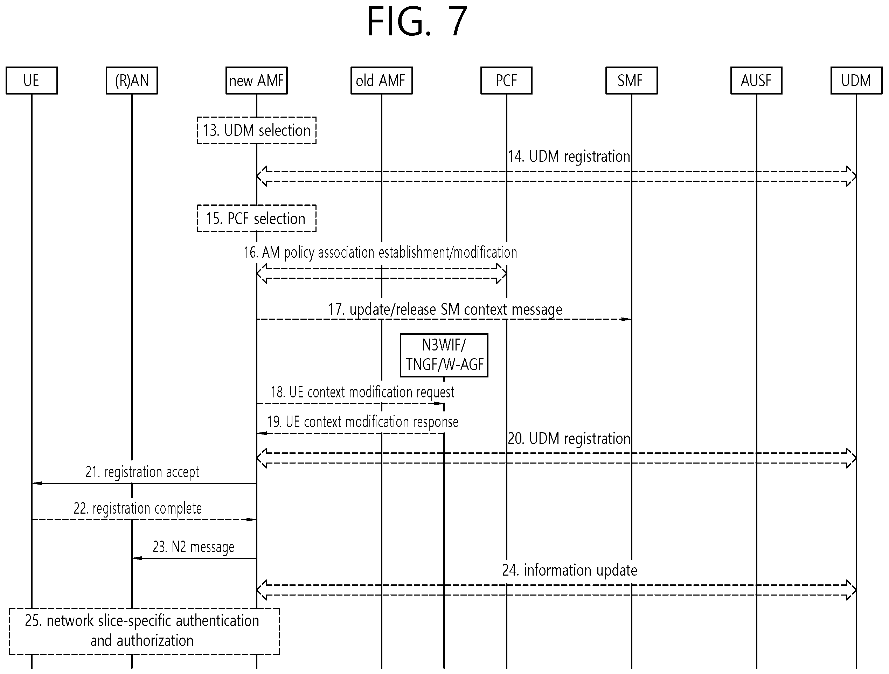

**FIGS. 6** **and** **7** **show an example of a registration procedure to which implementations of the present disclosure is applied.**

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 6 and 7 applies on all these registration procedures, but the periodic registration update need not include all parameters that are used in other registration cases.

The general registration procedure in FIGS. 6 and 7 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 6 are described.

(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available,
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 7, which follow the procedures of FIG. 6, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.

(24) Step 24: The new AMF may perform information update towards the UDM.

(25) Step 25: The UE may execute Network Slice-Specific Authentication and Authorization procedure.

### <URSP in VPLMN>

Currently, URSP is only controlled and determined by HPLMN. Therefore, to give influence on URSP determination, the AF needs to provide inputs to HPLMN. The application guidance for URSP determination may be for Edge services or for location-based services which means there may be the case that the URSP rules determined based on the application guidance can be applied and valid only when the UEs are in any specific VPLMN in roaming case. Anyhow, in this case, the AF may need to provide application guidance for URSP determination to all PLMNs whose subscribers will be probably roaming into the VPLMN, and the AF has service level agreements with. In addition, if the AF includes a geographical area as spatial validity condition in the application guidance for URSP determination, the NEF may need to transform this information into 3GPP identifiers (e.g. TAI(s)). For this, the NEF needs to have knowledge on VPLMN's 3GPP identifiers (e.g. TAI(s)).

The AF provides application guidance for URSP determination to the PLMN (i.e. to UDR via NEF of this PLMN) where the related services are provided or the related traffic is routed. H-PCF of the roaming UE obtains the application guidance for URSP determination from VPLMN by requesting V-PCF to subscribe to V-UDR to be notified about the data creation/modification for the UE. V-PCF subscribes to V-UDR on behalf of H-PCF, by adding a new PCRT that request notification when Service Parameters are available for a UE Policy Association. If the AF provides inputs to V-UDR via V-NEF, V-PCF provides the data notified by V-UDR to H-PCF.

The AF can include the PLMN ID(s) when provisioning application guidance for URSP determination for all HPLMNs whose subscribers may roam into the VPLMN, in order to indicate that the provisioned information is for roamers from that PLMN ID(s). The Application data in UDR is extended to provide PLMN ID as Data Key. Table 3 shows "PLMN ID" as an additional Data Key.

**[Table 3]**

| **Data Set** | **Data Subset** | **Data Key** | **Data Sub Key** |
|---|---|---|---|
| Application data | Service specific information (See clause 4.15.6.7) | S-NSSAI and DNN or | - |
| | | Internal Group Identifier or SUPI or "PLMN ID" or "any UE" indication (NOTE 4) (NOTE 5) | |
| NOTE 4: When the Data Key targets "any UE", then the request to UDR applies on Application data that applies on all subscribers of the PLMN. | | | |
| NOTE 5: When the Data Key targets "PLMN ID", then the request to UDR applies on Application data that applies on all subscribers of that PLMN ID. The AF provides a PLMN ID if the request applies for all subscribers of that PLMN that can be roaming to the VPLMN the AF provides the request to. | | | |

This solution reuses the existing Npcf_UEPolicyControl Service for the H-PCF to subscribe to reception of new/updated Service Parameters for the UE, using a new PCRT and for the V-PCF to notify to the H-PCF and provide the Service Parameters for the UE to the H-PCF.

The H-PCF generates a new URSP Rule or updates an existing URSP Rule with the same traffic descriptor as provided in the Service Parameters, if the S-NSSAI subscription information indicates that this DNN, S-NSSAI is subscribed, and LBO roaming is allowed.

The H-PCF sends the URSP Rule to the UE using existing procedures. In addition, the H-PCF subscribes to "change of PLMN", then when the UE moves to a different PLMN, the H-PCF removes or updates the URSP Rule sent to the UE to remove the RSD that routed the traffic thought the VPLMN were the UE was registered. The H-PCF also removes or updates the URSP Rule sent to remove the RSD that routed the traffic though the VPLMN when the V-PCF requests to terminate the UE Policy Association.

### <Disclosure of the present specification>

In a roaming scenario, a method for an HPLMN to receive information from a VPLMN to generate a URSP rule may be proposed. In addition, a method for providing the URSP rule to a UE may be proposed.

A method for efficiently providing service parameters from a VPLMN to an HPLMN may be composed of a combination of one or more of the following operations/configurations/steps.

In this specification, service parameters may be used interchangeably with service parameter information, AF application guidance, AF application guidance information, AF guidance, AF guidance information, AF request information, AF inputs, service data, UDR storage data, etc.

This specification is not limited to service parameters provided by a VPLMN to an HPLMN. In addition, it may be applied to various information provided by a VPLMN to an HPLMN, such as events, assistance information, policy control-related information, etc.

In this specification, UE (User Equipment) and terminal are used interchangeably.

In this specification, AF(Application Function), AS (Application Server) and server are described interchangeably.

This specification mainly describes the proposed content. The basic operation of the 5G system can be referred to TS 23.501 V17.6.0, TS 23.502 V17.6.0, TS 23.503 V17.6.0, etc.

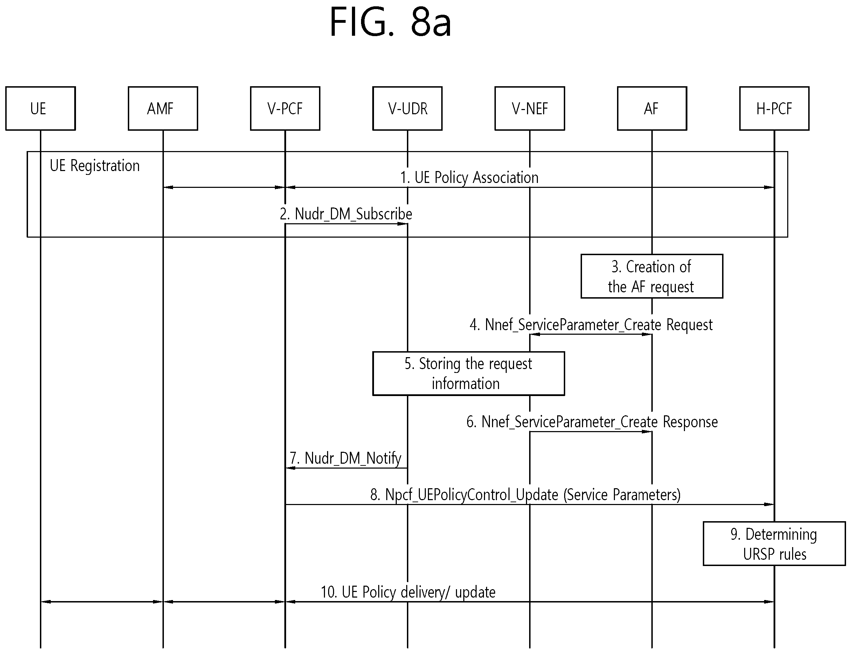

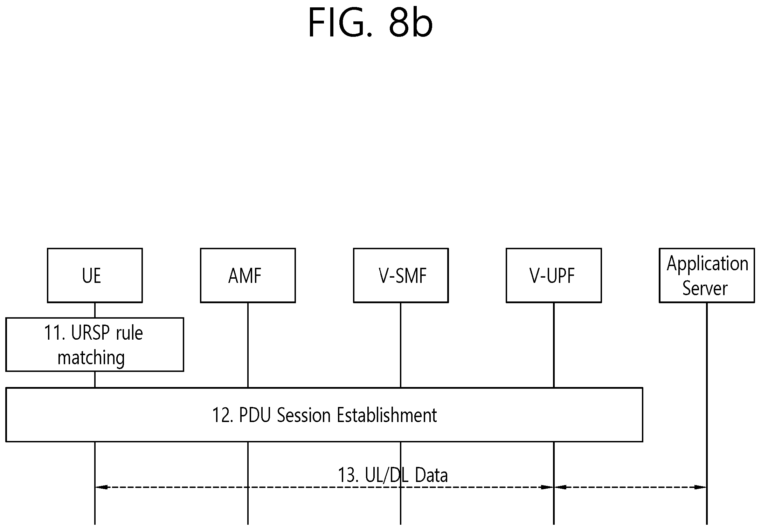

**FIGS. 8a** **and** **8b** **show procedures according to embodiments of this specification.**

FIGS. 8a and 8b illustrate a procedure for determining URSP based on service parameters acquired from a V-PLMN.
1. The UE may be registered to 5GC and the UE Policy Association is performed between the AMF and the H-PCF via V-PCF. In addition, the H-PCF may subscribe using a new PCRT "Service Parameters received" to the V-PCF. The V-PCF may provide the Service Parameters if available.
2. Based on the reception of a new PCRT from the H-PCF, the V-PCF may subscribes to the reception of Service Parameters from the AF for the determination of URSP Rules for any UE of that HPLMN registered in this VPLMN, if not subscribes to V-UDR when the UE Policy Association is created for subscribers of that HPLMN.

The V-PCF may include VPLMN DNN and S-NSSAI in the subscription request to the UDR given that the AF provides Application guidance for URSP determination to the VPLMN.

3. To provide Application guidance for URSP determination as specified in clause 4.15.6.10 of TS 23.502 V17.6.0, the AF may create a new request.

4-6. As specified in steps 2 to 4 in clause 4.15.6.7 of TS 23.502 V17.6.0, the AF may send its request to the NEF, and the NEF may store the AF request information in the UDR and may respond to the AF. The NEF may be V-NEF and the UDR may be V-UDR.

The AF request may be targeting any UE (all UEs) of a HPLMN that are registered in this VPLMN. Therefore, the V-NEF may authorize the request based on local policy based on service level agreements between the AF and the VPLMN (e.g. based on AF Id) without requesting for any service specific authorization from UDM as specified in clause 4.15.6.10 of TS 23.502 V17.6.0.

The AF may reques targeting a specific UE or a group of UE(s) does not apply to this solution because Service Specific Authorization for an individual UE or group of UEs by NEF to UDM has to be performed for the AF request as specified in clause 4.15.6.10 of TS 23.502 V17.6.0.

7. The V-PCF may receive a Nudr_DM_Notify notification of data change from the V-UDR.

8. The V-PCF may send the notification of data change from the V-UDR invoking Npcf_UEPolicyControl_Update including the Service Parameters that have been received from the UDR to the H-PCF. The V-PCF also may provide the mapping of the VPLMN S-NSSAI to HPLMN S-NSSAI and the mapping of the VPLMN DNN to HPLMN DNN to the H-PCF.

9. The H-PCF may determine the URSP rules that is to be sent to the UE based on the Service Parameters received from the V-PCF and the S-NSSAI subscription information for this SUPI, DNN, S-NSSAI retrieved from the UE context policy control subscription information from the UDR. The H-PCF may generate a new URSP Rule or update an existing URSP Rule that was sent to the UE for the same traffic descriptor to include a new RSD with the DNN, S-NSSAI provided by the V-PCF then sets the RSD precedence and validity conditions taking the information provided by the V-PCF into account.

For example, the H-PCF may replace any URSP rules related to Route Selection Descriptor(s) including the DNN and S-NSSAI.

10. The H-PCF may provision the URSP rules to the UE via the V-PCF by using the UE Configuration Update procedure for transparent UE Policy delivery as specified in clause 4.2.4.3 of TS 23.502 V17.6.0. The H-PCF may provide S-NSSAI and DNN values of the VPLMN to the UE in the RSD component of the URSP rule.

11. The UE may need to send traffic, e.g. destined to an Edge service. Therefore, the UE determines a URSP rule applicable for the traffic. For URSP Rules applicable in the VPLMN the UE may consider a RSD valid if the S-NSSAI value is in the Allowed NSSAI instead of the Mapping Of Allowed NSSAI.

12. If there is no PDU Session that matches all components in the selected RSD within the URSP rule, the UE may establish a PDU Session. The UE may provide both the S-NSSAI of the VPLMN, e.g., the S-NSSAI in the URSP Rule, and the S-NSSAI of the HPLMN obtained from the mapping of the Allowed NSSAI to HPLMN S-NSSAI as described in clause 5.15.5.3 of TS 23.501 V17.6.0. The UE may include the DNN of the VPLMN, e.g., the DNN in the URSP Rule if provided as UE Requested DNN, as described in clause 6.6.2.1 of TS 23.503 V17.6.0. If the UE Requested DNN is supported but not subscribed, then the AMF may check if there is a mapping to the HPLMN DNN configured, then uses it for subscription check. The AMF uses the UE Requested DNN as Selected DNN, then perform SMF selections. The AMF may send both the Selected DNN (e.g., UE Requested DNN) and the DNN value of the HPLMN to SMF. The SMF may use the DNN value of the HPLMN and the S-NSSAI value of the HPLMN for subscription check as described in clause 4.3.2.2.1 of TS 23.502 V17.6.0.

13. The UE may communicate with the Application Server, e.g. Edge Application Server.

For the procedure illustrated in FIG. 8, the H-PCF, V-PCF, H-UDR, UE and AMF shall support the following actions or functions:

### H-PCF:

- may subscribe to a new PCRT "Service Parameters received".
- may receive Service Parameters for a UE Policy Control Association established with the V-PCF.
- may determine URSP rules based on the data provided by AF and received via V-UDR and V-PCF, taking S-NSSAI subscription information into account.
- S-NSSAI subscription information extended to include if LBO is allowed.

### V-PCF:

- may subscribe to V-UDR to be notified about the Service Parameters creation/modification for roaming UEs if the H-PCF provided a PCRT.
- may provide the Service Parameters notified by V-UDR to H-PCF.

### H-UDR:

- S-NSSAI Subscription information needs to include an indication of whether LBO roaming is allowed for a DNN, S-NSSAI.

### UE:

- For URSP Rules applicable in the VPLMN, the UE may consider the RSD as valid if the S-NSSAI value is in the Allowed NSSAI instead of the Mapping Of Allowed NSSAI.

### AMF:

- At PDU Session Establishment, uses the UE requested DNN as Selected DNN, for subscription check, the AMF may map the UE Requested DNN to HPLMN DNN.

In the above procedure, the service parameters provided by the AF may be provided as being applicable to all PLMN subscribers. In this case, even if the service parameter information is the same, the V-PCF may provide it through signaling that is exchanged between the V-PCF and the H-PCF for each UE.

For example, if UE#1, which has subscribed to the HPLMN to which the service parameters are applied, roams to the VPLMN, the V-PCF of the VPLMN may provide the service parameters to the H-PCF using the policy association established with the H-PCF for UE#1. If another UE (UE#2) that has subscribed to the same PLMN as the HPLMN of the UE#1, roams to the VPLMN, the V-PCF of the VPLMN provides the service parameters to the H-PCF using the policy association established with the H-PCF for UE#2.

In this way, the V-PCF may repeatedly provide the same service parameters to the H-PCF as many times as the number of UEs, which may cause inefficiency.

This may not be efficient in terms of signaling, as each UE would have to send a message to HPLMN to provide the same service parameters.

### I. First embodiment

The procedure according to the first embodiment basically follows the contents described in FIG. 8.

The contents of Step. 8 of FIG. 8 according to the first embodiment will be described below.

8. V-PCF may transmit/provide data received from UDR to H-PCF. The data may include service parameters provided by AF.

In relation to this, the following contents may be applied:

1) If the data (service parameters) are applied to all terminals (any UE) that have joined HPLMN, V-PCF may decide to provide/notify the data (service parameters) to H-PCF only once. In relation to step 8, 1-1) and/or 1-2) described below may be performed.

1-1) V-PCF may select one UE to provide the data to H-PCF. This may mean selecting one UE policy association to provide the data to H-PCF.

A UE policy association (UE Policy Association) may be established between V-PCF and H-PCF for each UE (step. 1). Multiple UEs may establish UE policy associations with V-PCF and H-PCF. If the above data (service parameters) are applied to all terminals (any UE) that have joined the HPLMN, the V-PCF may select one UE Policy Association to provide the data to the H-PCF.

UE policy associations (UE Policy Association) may be established with multiple H-PCF for multiple UEs for the HPLMN. For example, UE policy association may be established with a first H-PCF for a first UE, and UE policy association may be established with a second H-PCF for a second UE. In this case, the V-PCF may select one UE Policy Association to provide the data for each H-PCF. If there is only one UE that has established a policy association with the H-PCF (e.g., a UE policy association), the V-PCF may select the corresponding UE. If there are multiple UEs that have established a policy association with the H-PCF (e.g., UE policy association), the V-PCF may select one of the multiple UEs.

The selection of the V-PCF may be based on various information/situations.

For example, the selection of the V-PCF may be performed based on a local policy, a local configuration.

For example, the selection of the V-PCF may be performed based on the number of UEs (served by the V-PCF or the VPLMN) that have roamed from the HPLMN. For example, if the number of UEs is greater than/exceeds a certain threshold, the V-PCF may decide to provide the data to the H-PCF only once.

For example, if there is a UE that needs to transmit an Npcf_UEPolicyControl_Update message to the H-PCF due to another event/issue in addition to the data provided from the UDR, the V-PCF may select the UE by considering this. When a UE that needs to transmit an Npcf_UEPolicyControl_Update message to the above H-PCF is selected, the V-PCF may transmit the Npcf_UEPolicyControl_Update message together with the above data to the UE.

The V-PCF may provide data to the H-PCF using the selected UE policy association. When the V-PCF selects a UE policy connection for each H-PCF for multiple H-PCFs, the V-PCF may provide data to the H-PCF using each selected UE policy association. The V-PCF may transmit an Npcf_UEPolicyControl_Update containing data to the H-PCF using each selected UE policy association. In this case, the V-PCF may explicitly or implicitly include one or more of the following a, b, and c in the Npcf_ UEPolicyControl_Update. For this purpose, a new information element may be defined in the Npcf_UEPolicyControl_Update message.
a. Information indicating that the above data is applicable/applied to all UEs (any UE (all UEs))
b. Information indicating that the above data is provided to selected UEs (or provided only once) but is applicable/applied to all UEs (any UE (all UEs))
c. Information requesting that the above data be applied to all UEs (any UE (all UEs))

1-2) V-PCF may provide the above data to H-PCF.

In order to provide the above data from V-PCF to H-PCF, a new PCF service operation may be defined, or a conventional PCF service operation may be extended and used. For example, a service operation other than Npcf_UEPolicyControl_Update may be used.

The above data provision may be interpreted as V-PCF providing data to H-PCF without using UE policy association. Or, the above data provision may be interpreted as V-PCF providing data to H-PCF without using per UE signaling. Or, the above data provision may be interpreted as V-PCF providing data to H-PCF through association/signaling between PCFs.

When multiple UEs establish UE policy associations with multiple H-PCFs, V-PCF may provide data to each of multiple H-PCFs. PCF may transmit Npcf_UEPolicyControl_Update containing data to each of multiple H-PCFs. In this case, V-PCF may explicitly or implicitly include one or more of the following i and ii in Npcf_UEPolicyControl_Update:
i. Information indicating that the above data is applicable/applied to all UEs (any UE (all UEs))
ii. Information requesting that the above data be applied to all terminals (any UE (all UEs))

2) If the above data is applied to specific UEs of the HPLMN or UEs belonging to a specific group, the V-PCF may provide/notify the data to the H-PCF for each target UE(s). For example, the V-PCF may provide the data to the H-PCF through the UE policy association established with the H-PCF for the target UE.

In the above 1) and 2), the V-PCF's determination that the data is applied to any UE of the HPLMN or specific UE or UEs belonging to a specific group may be based on one or more of the following information.
- Information included in the service parameters provided by the AF
- Information provided by the NEF based on the service parameters provided by the AF (e.g., target UE information, PLMN ID information, DNN information, S-NSSAI information, etc.)
- Local policy/configuration information of the V-PCF

When multiple UEs managed by one H-PCF (e.g., multiple UEs that have joined the HPLMN including one H-PCF) roam to the VPLMN, the multiple UEs may establish UE policy association with the V-PCF and the H-PCF. If the service parameters received by the V-PCF are applicable to all of the multiple UEs, the V-PCF may provide the service parameters to the H-PCF only once for the multiple UEs. For example, the V-PCF may not need to transmit the service parameters to the H-PCF for the multiple UEs as many times as the number of the multiple UEs.

Step 9. The H-PCF may determine that the data provided from the V-PCF (which may be service parameters provided by the AF) should be applied to any UE (all UEs) based on one or more of the following information:
- The target UE of the data (e.g., Service Parameters) is set to any UE (all UEs)
- One or more of the information a) to c) described in step 8 above

If the H-PCF determines that the data provided should be applied to all UEs, the H-PCF may perform URSP rule determination-related operations (operations described in step 9 of FIG. 8) for all UEs (any UE). The all UEs(any UE) may be UEs roaming (registered) in the VPLMN (e.g., the PLMN to which the V-PCF belongs). For example, the H-PCF may perform the URSP rule determination-related operation for the UEs that have roamed (registered) in the VPLMN (i.e., the PLMN to which the V-PCF belongs) among the UEs that it serves.

The H-PCF may determine the respective URSP rules for multiple UEs based on the same service parameters.

The H-PCF may send the V-PCF a response message including response information indicating that the provided data will be applied to any UE (all UEs).

If the V-PCF supports the operation described in step 8, it may provide it to the H-PCF when establishing the UE policy association. If the H-PCF supports the operation described in step 9, it may provide it to the V-PCF when establishing the UE policy association. The V-PCF may operate in the form described in step 8 only if the H-PCF notifies the support for the above. Based on the fact that the H-PCF notified the support for the operation described in step 9, the V-PCF may perform the operation described in step 8.

H-PCF may transmit the determined URSP rule to the terminal through V-PCF.

The following steps may be applied to the contents of FIG. 8.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

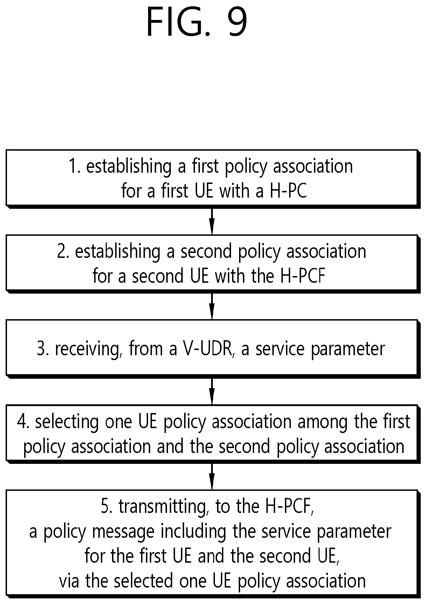

**FIG. 9** **shows the procedure of the target V-PCF according to disclosure of the present specification.**
1. The V-PCF may establish a first policy association for a first UE (User Equipment) with a H-PCF (Home-PCF).
2. The V-PCF may establish a second policy association for a second UE with the H-PCF.
3. The V-PCF may receive, from a V-UDR (Visited Unified Data Repository), a service parameter.
4. The V-PCF may select one UE policy association among the first policy association and the second policy association, based on the service parameter being applicable to the first UE and the second UE.
5. The V-PCF may transmit, to the H-PCF, a policy message including the service parameter for the first UE and the second UE, via the selected one UE policy association.

The first UE may be a different UE from the second UE.

The first UE and the second UE may be UEs that have joined an HPLMN (Home public land mobile network) to which the H-PCF belongs.

The first UE and the second UE have roamed to VPLMN (Visited PLMN) to which the V-PCF belongs.

The policy message may include information that the service parameter is applied to the first UE and the second UE.

The step of establishing the first policy association may comprises:

receiving, from the H-PCF, capability information that the H-PCF can determine to apply the service parameters to the first UE and the second UE.

The step of transmitting the policy message may be performed, based on the capability information.

The V-PCF may receive, from the H-PCF, a first URSP (UE route selection policy) rule based on the service parameter, based on the policy message.

The V-PCF may transmit, to the first UE, the first URSP rule.

The V-PCF may receive, from the H-PCF, a second URSP rule based on the service parameter, based on the policy message.

The V-PCF may transmit, to the second UE, the second URSP rule.

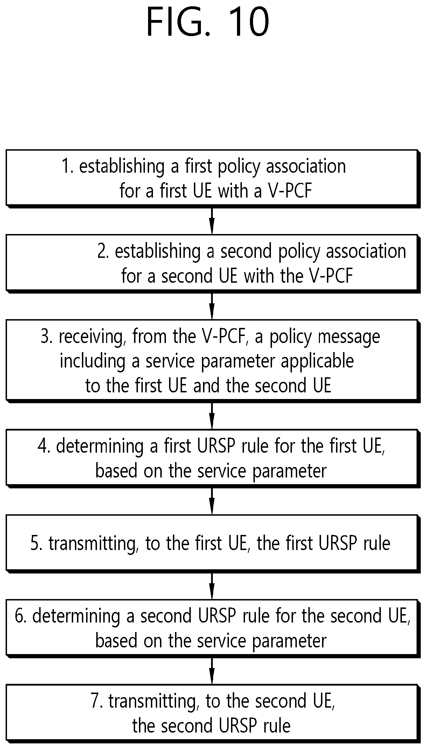

**FIG. 10** **shows the procedure of the target H-PCF according to disclosure of the present specification.**
1. The H-PCF may establish a first policy association for a first UE (User Equipment) with a V-PCF (Visited-PCF).
2. The H-PCF may establish a second policy association for a second UE with the V-PCF.
3. The H-PCF may receive, from the V-PCF, a policy message including a service parameter applicable to the first UE and the second UE.
4. The H-PCF may determine a first URSP rule for the first UE, based on the service parameter.
5. The H-PCF may transmit, to the first UE, the first URSP rule.
6. The H-PCF may determine a second URSP rule for the second UE, based on the service parameter.
7.The H-PCF may transmit, to the second UE, the second URSP rule.

The first UE may be a different UE from the second UE.

The first UE and the second UE have roamed to VPLMN (Visited PLMN) to which the V-PCF belongs.

The first UE and the second UE may be UEs that have joined an HPLMN to which the H-PCF belongs.

The policy message may include information that the service parameter is applied to the first UE and the second UE.

The step of establishing the first policy association may comprise:

transmitting, to the V-PCF, capability information that the H-PCF can determine to apply the service parameters to the first UE and the second UE.

The step of receiving the policy message may be performed, based on the capability information.

Hereinafter, an apparatus for performing communication according to some embodiments of the present specification will be described.

For example, a target V-SMF may include a processor, a transceiver, and a memory.

For example, a processor may be configured to be operably coupled with a memory and a processor.

The processor may perform: establishing a first policy association for a first UE (User Equipment) with a H-PCF (Home-PCF); establishing a second policy association for a second UE with the H-PCF; receiving, from a V-UDR (Visited Unified Data Repository), a service parameter; selecting one UE policy association among the first policy association and the second policy association, based on the service parameter being applicable to the first UE and the second UE; transmitting, to the H-PCF, a policy message including the service parameter for the first UE and the second UE, via the selected one UE policy association, wherein the first UE is a different UE from the second UE, wherein the first UE and the second UE are UEs that have joined an HPLMN (Home public land mobile network) to which the H-PCF belongs.

Hereinafter, a processor for providing communication according to some embodiments of the present specification will be described.

The processor is configured to: establishing a first policy association for a first UE (User Equipment) with a H-PCF (Home-PCF); establishing a second policy association for a second UE with the H-PCF; receiving, from a V-UDR (Visited Unified Data Repository), a service parameter; selecting one UE policy association among the first policy association and the second policy association, based on the service parameter being applicable to the first UE and the second UE; transmitting, to the H-PCF, a policy message including the service parameter for the first UE and the second UE, via the selected one UE policy association, wherein the first UE is a different UE from the second UE, wherein the first UE and the second UE are UEs that have joined an HPLMN (Home public land mobile network) to which the H-PCF belongs.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: establishing a first policy association for a first UE (User Equipment) with a H-PCF (Home-PCF); establishing a second policy association for a second UE with the H-PCF; receiving, from a V-UDR (Visited Unified Data Repository), a service parameter; selecting one UE policy association among the first policy association and the second policy association, based on the service parameter being applicable to the first UE and the second UE; transmitting, to the H-PCF, a policy message including the service parameter for the first UE and the second UE, via the selected one UE policy association, wherein the first UE is a different UE from the second UE, wherein the first UE and the second UE are UEs that have joined an HPLMN (Home public land mobile network) to which the H-PCF belongs.

The present specification may have various effects.

For example, service parameters can be efficiently provided from VPLMN to HPLMN.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a V-PCF (Visited Policy Control Function), comprising:
establishing a first policy association for a first UE (User Equipment) with a H-PCF (Home-PCF);
establishing a second policy association for a second UE with the H-PCF;
receiving, from a V-UDR (Visited Unified Data Repository), a service parameter;
selecting one UE policy association among the first policy association and the second policy association, based on the service parameter being applicable to the first UE and the second UE;
transmitting, to the H-PCF, a policy message including the service parameter for the first UE and the second UE, via the selected one UE policy association,
wherein the first UE is a different UE from the second UE,
wherein the first UE and the second UE are UEs that have joined an HPLMN (Home public land mobile network) to which the H-PCF belongs.

2. The method of claim 1,
wherein the first UE and the second UE have roamed to VPLMN (Visited PLMN) to which the V-PCF belongs.

3. The method of claim 1 or claim 2,
wherein the policy message includes information that the service parameter is applied to the first UE and the second UE.

4. The method of one of the claims 1 to 3,
wherein the step of establishing the first policy association comprises:
receiving, from the H-PCF, capability information that the H-PCF can determine to apply the service parameters to the first UE and the second UE,
wherein the step of transmitting the policy message is performed, based on the capability information.

5. The method of one of the claims 1 to 4, further comprising:
receiving, from the H-PCF, a first URSP (UE route selection policy) rule based on the service parameter, based on the policy message;
transmitting, to the first UE, the first URSP rule;
receiving, from the H-PCF, a second URSP rule based on the service parameter, based on the policy message;
transmitting, to the second UE, the second URSP rule.

6. A method for performing communication, performed by a H-PCF (Home Policy Control Function), comprising:
establishing a first policy association for a first UE (User Equipment) with a V-PCF (Visited-PCF);
establishing a second policy association for a second UE with the V-PCF;
receiving, from the V-PCF, a policy message including a service parameter applicable to the first UE and the second UE;
determining a first URSP rule for the first UE, based on the service parameter;
transmitting, to the first UE, the first URSP rule;
determining a second URSP rule for the second UE, based on the service parameter;
transmitting, to the second UE, the second URSP rule,
wherein the first UE is a different UE from the second UE.

7. The method of claim 6,
wherein the first UE and the second UE have roamed to VPLMN (Visited PLMN) to which the V-PCF belongs,
wherein the first UE and the second UE are UEs that have joined an HPLMN to which the H-PCF belongs.

8. The method of claim 6 or claim 7,
wherein the policy message includes information that the service parameter is applied to the first UE and the second UE.

9. The method of one of the claims 6 to 8,
wherein the step of establishing the first policy association comprises:
transmitting, to the V-PCF, capability information that the H-PCF can determine to apply the service parameters to the first UE and the second UE,
wherein the step of receiving the policy message is performed, based on the capability information.

10. A V-PCF (Visited Policy Control Function), to perform communication, comprising:
a transceiver; and
a processor,
wherein the processor performs operation that is a method of one of the claims 1 to 5.

11. A V-PCF (Visited Policy Control Function), to perform communication, comprising:
a transceiver; and
a processor,
wherein the processor performs operation that is a method of one of the claims 6 to 9.

12. An apparatus in mobile communication, comprising:
at least one processor, and
at least one memory storing instructions and operably electrically connectable with the at least one processor,
wherein, based on the instructions being operated by the at least one processor, the instructions perform operation that is a method of one of the claims 1 to 5.

13. A non-volatile computer readable storage medium having recorded instructions,
wherein the instructions, based on being executed by one or more processors, cause the one or more processors to perform operation that is a method of one of the claims 1 to 5.
